(19) **Europäisches Patentamt**

**European Patent Office**

**Office européen des brevets**

(11) Numéro de publication: **0 122 851**
**B1**

(12) **FASCICULE DE BREVET EUROPEEN**

(45) Date de publication du fascicule du brevet:
**15.07.87**

(21) Numéro de dépôt: **84400697.3**

(22) Date de dépôt: **09.04.84**

(51) Int. Cl.⁴: **F 16 K 17/16**

(54) Dispositif de sécurité à membrane et couteau d'éclatement, destiné à limiter la pression d'un fluide.

(30) Priorité: **14.04.83 FR 8306111**

(43) Date de publication de la demande:
**24.10.84 Bulletin 84/43**

(45) Mention de la délivrance du brevet:
**15.07.87 Bulletin 87/29**

(84) Etats contractants désignés:
**BE DE GB IT NL**

(56) Documents cités:
**FR - A - 1 292 002**
**FR - A - 2 192 719**
**US - A - 1 671 369**

(73) Titulaire: **ELECTRICITE DE FRANCE Service National, 2, rue Louis Murat, F-75008 Paris (FR)**

(72) Inventeur: **Lebras, Jean, 8, rue L'Epinoy Ville Saint Jacques, F-77130 Montereau (FR)**
Inventeur: **Nedelec, Joseph, 35, rue de Montmachoux, F-77940 Voulx (FR)**

(74) Mandataire: **Mongrédien, André et al, c/o BREVATOME 25, rue de Ponthieu, F-75008 Paris (FR)**

## Description

La présente invention concerne un dispositif de sécurité à membrane et couteau d'éclatement, destiné à limiter la pression d'un fluide. Elle s'applique notamment à la protection d'installations contenant un fluide (c'est-à-dire un liquide ou un gaz) sous pression, et en particulier à la protection des générateurs de vapeur des réacteurs à neutrons rapides, refroidis au sodium: elle permet de protéger ces générateurs de vapeur des effets d'une surpression accidentelle provenant d'une réaction sodium-eau et d'évacuer les produits de cette réaction.

On connaît un dispositif de sécurité à membrane et couteau d'éclatement, destiné à limiter la pression d'un fluide et décrit dans le document FR-A-2 192 719.

Dans ce dispositif, le couteau est fixe et la membrane ne peut éclater qu'après s'être suffisamment déformée en direction du couteau, lors de l'atteinte par la pression d'une valeur appelée pression d'éclatement et définie par un préréglage de la distance entre le couteau et la membrane. Ce dispositif a donc un fonctionnement qui ne peut être que passif, c'est-à-dire absolument tributaire de l'évolution de l'amplitude de la pression en fonction du temps, dans l'installation protégée.

Un tel fonctionnement uniquement passif constitue un inconvénient car, pour des raisons d'exploitation (telles que l'évacuation des produits de la réaction sodium-eau dans l'exemple donné plus haut, afin de minimiser les phénomènes de corrosion caustique) ou pour des raisons de protection de structures, il peut être intéressant d'anticiper l'éclatement de la membrane, c'est-à-dire de la faire éclater avant que ne soit atteinte la pression d'éclatement.

La présente invention a justement pour objet un dispositif de sécurité à membrane et couteau d'éclatement qui ne présente pas l'inconvénient du dispositif précédent, notamment en ce que son fonctionnement peut être non seulement passif mais encore actif.

On connaît, par le document FR-A-1 292 002, un distributeur de fluide, à utiliser une seule fois. Ce distributeur comporte une membrane qui peut être perforée à l'aide d'un outil coupant mobile qui peut être actionné par une commande pyrotechnique appropriée et qui est placé en regard de la face concave de la membrane, face du côté de laquelle se trouve le fluide.

De façon précise, la présente invention a pour objet un dispositif de sécurité destiné à limiter la pression d'un fluide à une valeur prédéterminée, ce dispositif comprenant au moins un élément modulaire creux, ouvert à ses deux extrémités, et, pour chaque élément modulaire:

– des moyens d'étanchéité montés sur lesdites extrémités,

– une membrane préformée présentant une face convexe et une face concave, et montée comme obturateur étanche de l'une des extrémités, la face convexe de ladite membrane étant orientée vers l'intérieur de l'élément modulaire, et

– un couteau monté à l'intérieur de l'élément modulaire, en regard de la face convexe de la membrane et à une distance réglable de cette face convexe de sorte qu'une pression prédéterminée exercée par le fluide sur la face concave de ladite membrane amène cette membrane au contact du couteau qui provoque alors son éclatement, dispositif caractérisé en ce qu'il comporte en outre, pour chaque élément modulaire, des moyens pour faire percuter la membrane par le couteau, afin de pouvoir provoquer l'éclatement de ladite membrane lorsque la face concave de celle-ci est soumise de la part du fluide à une pression inférieure à ladite pression prédéterminée.

Le dispositif objet de l'invention a donc effectivement un fonctionnement qui peut être actif ou passif, selon que l'on fait fonctionner ou non lesdits moyens pour faire percuter la membrane par le couteau.

Bien entendu, le dispositif objet de l'invention peut, selon les besoins, comporter un ou plusieurs éléments modulaires placés en série sur l'installation à protéger.

Selon une caractéristique particulière du dispositif objet de l'invention, lesdits moyens pour faire percuter la membrane par le couteau comportent une partie susceptible de se déplacer et le couteau est rendu solidaire de cette partie et a une position réglable par rapport à celle-ci.

Lesdits moyens pour faire percuter la membrane par le couteau sont par exemple des moyens pneumatiques. Selon un mode de réalisation particulier de l'invention, lesdits moyens pour faire percuter la membrane par le couteau comprennent:

– une chambre montée à l'intérieur de l'élément modulaire en regard de la face convexe de la membrane,

– des moyens d'alimentation en gaz de la chambre pour la mise en pression de celle-ci,

– un piston qui, d'une part porte le couteau, celui-ci ayant une position réglable par rapport au piston, et qui d'autre part, est prévu pour coulisser dans la chambre lors de la mise en pression de celle-ci, en direction de la face convexe de la membrane, et

– des moyens mécaniques prévus pour immobiliser le piston dans la chambre et pour s'effacer sous l'effet d'un déplacement du piston lors de la mise en pression de la chambre.

De préférence, le couteau est bloqué en rotation par rapport au piston et le piston est bloqué en rotation par rapport à ladite chambre. Cela permet au couteau de percuter la membrane en ur point précis de celle-ci.

Selon un mode de réalisation préféré de l'invention, le couteau comprend une lèvre centrale terminée en pointe et bordée par deux lèvres d'attaque de façon à pouvoir d'abord percer la membrane et ensuite cisailler celle-ci.

Selon une caractéristique préférée de l'invention, la pointe du couteau étant susceptible de se déplacer selon une direction déterminée, sous l'effet desdits moyens pour faire percuter la membrane par le couteau, les lèvres d'attaque sont délimitées, d'un côté, respectivement par des faces planes de dégagement faisant un angle aigu supérieur à 5° avec ladite direction déterminée, et de l'autre côté, par une même face plane faisant avec ladite direction déterminée un angle de dépouille inférieur audit angle aigu et au plus égal à 5°. L'angle de dépouille est par exemple égal à 2°.

Un tel couteau est très fiable, c'est-à-dire est capable de provoquer à coup sûr l'éclatement de la membrane lorsqu'il percute celle-ci (fonctionnement actif du dispositif selon l'invention) ou lorsque cette membrane se déforme jusqu'à atteindre le couteau (fonctionnement passif du dispositif selon l'invention), ce qui n'est pas le cas du couteau décrit dans le brevet français n° 2 192 719 déjà cité, qui est capable de percer la membrane mais ne la fait pas systématiquement éclater.

De préférence, la membrane présentant la forme d'une calotte sphérique, les moyens pour faire percuter la membrane par le couteau sont prévus pour que sous leur effet, la pointe du couteau se déplace le long de l'axe de symétrie de ladite calotte sphérique de façon à percuter la membrane en son sommet.

Enfin, selon une autre caractéristique particulière du dispositif objet de l'invention, le couteau est placé dans un milieu gazeux chimiquement inerte.

l'invention sera mieux comprise à la lecture de la description qui suit d'exemples de réalisation donnés à titre indicatif et non limitatif, en référence aux dessins annexés sur lesquels:

— la figure 1 est une vue schématique d'un mode de réalisation particulier du dispositif objet de l'invention, à membrane et couteau d'éclatement,

— la figure 2 est une vue schématique d'un mode de réalisation particulier des moyens pour faire percuter la membrane par le couteau, et

— la figure 3 est une vue schématique d'un mode de réalisation préféré du couteau.

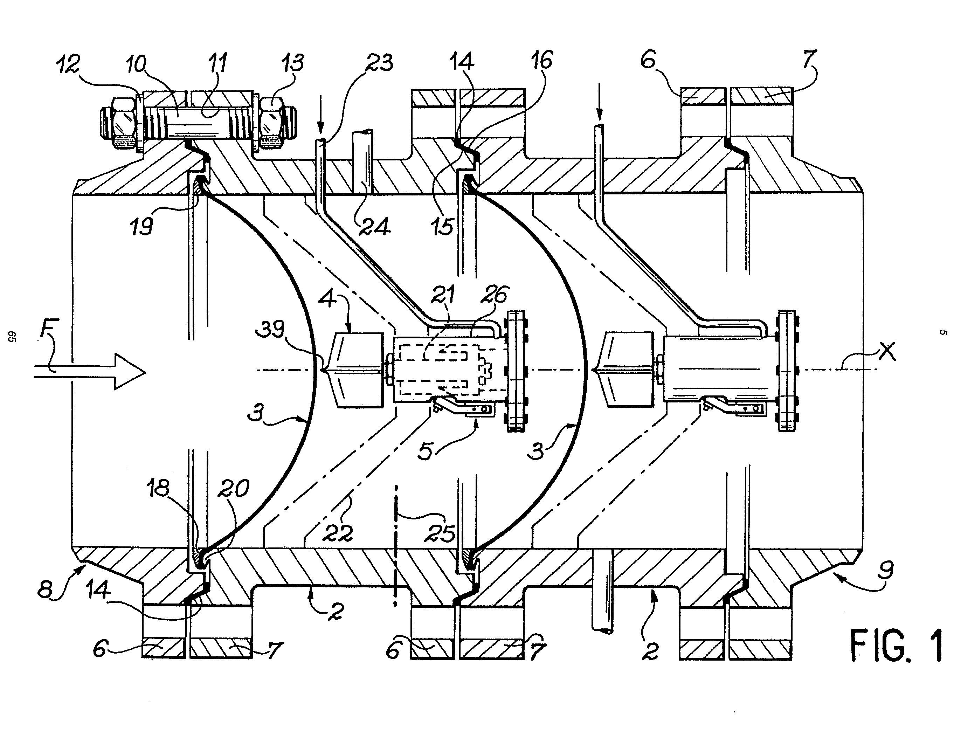

Sur la figure 1, on a représenté schématiquement un mode de réalisation particulier du dispositif objet de l'invention. Il comprend essentiellement au moins un élément modulaire 2 et, pour chaque élément modulaire, une membrane 3, un couteau 4 et des moyens 5 pour faire percuter la membrane 3 par le couteau 4.

Chaque élément modulaire 2 se présente sous la forme d'un corps creux, par exemple cylindrique et comportant des extrémités ouvertes respectivement terminées par des brides mâle 6 et femelle 7 prévues pour le raccordement d'un élément modulaire 2 à un autre élément modulaire ou à une canalisation 8 ou 9 terminée par une bride complémentaire de celle de l'élément modulaire à laquelle elle est destinée à être raccordée. Il y a par exemple deux éléments modulaires 2 montés en série, l'un étant raccordé à une canalisation 8 de l'installation à protéger, l'autre étant par exemple raccordé à une canalisation d'évacuation 9. Des moyens d'assemblage sont prévus entre les brides mâles et femelles et comprennent, par exemple, des boulons 10 passant dans des trous 11 ménagés dans les brides, des rondelles de sécurité 12 et des écrous de serrage 13. Des moyens 14 d'étanchéité, par exemple constitués par des joints de type S, sont montés aux extrémités des éléments modulaires 2, de façon que chaque joint se trouve placé entre les plans de joint 15 et 16 de brides mâle 6 et femelle 7 adjacentes, afin de réaliser une étanchéité classique vers l'extérieur.

La membrane 3 d'un élément modulaire 2 est en forme de calotte sphérique et comporte sur son pourtour une collerette péripherique 18 raccordée à ladite calotte sphérique. La membrane 3 est en métal ou en tout autre matériau approprié. Elle est par exemple obtenue par formage hydraulique à partir d'un flac d'acier inoxydable de 0,3 mm d'épaisseur.

La membrane 3 présente des avantages par rapport à d'autres membranes connues: contrairement à ces membranes qui sont dans leur fonctionnement limitées à une seule valeur de pression (pression d'éclatement obtenue par entailles calibrées d'une tôle ou par flambage d'une membrane de type «reverse»), la membrane 3, pour un diamètre de base et une épaisseur déterminés, peut couvrir une gamme de pressions d'éclatement par différents réglages du couteau. Ce paramètre, ainsi que l'homothétie existant entre les dispositifs de différents diamètres (géométrie, comportement) tend à diminuer leur prix de revient (d'où des frais d'études moindres, une mise au point rapide, . . .). Par ailleurs, les codes de calcul peuvent prendre en compte le comportement propre de la membrane, selon l'évolution des caractéristiques mécaniques, voire métallurgiques, liée aux sollicitations (pression, température) si après formage, la membrane 2 subit un traitement thermique à 1 100 °C qui détentionne complètement le matériau qui la constitue. Ce fait permet une meilleure connaissance de «la durée de vie» d'une membrane, définie par le temps et les conditions de sollicitation pour lesquelles les caractéristiques mécaniques sont suffisamment stables, pour ne pas altérer la valeur de la pression d'éclatement prédéterminée.

Chaque membrane 3 qui de par sa forme présente une face concave et une face convexe, est montée comme obturateur étanche de celles des extrémités de l'élément modulaire 2 correspondant, qui fait face à la canalisation 8, la face convexe de la membrane étant orientée vers l'intérieur de l'élément modulaire 2, de sorte que la pression du fluide présent dans la canalisation 8, pression symbolisée par la flèche F sur la figure 1, s'exerce sur la face concave de la membrane 3 directement en regard de la canalisation 8 (et s'exercerait sur la face concave de l'autre membrane si la précédente venait à éclater).

Chaque membrane 3 est associée à un anneau de renfort 19 par exemple métallique, et montée de façon que la collerette périphérique 18 correspondante soit prise entre cet anneau et un épaulement 20 de la bride de l'extrémité à laquelle se trouve la membrane 3. La collerette périphérique, l'anneau et l'épaulement sont assemblés par une soudure à lèvres qui réalise l'étanchéité entre l'amont et l'aval de la membrane. L'anneau 19 est conçu pour épouser parfaitement le raccordement entre la calotte hémisphérique et la collerette périphérique. Cet anneau permet de rigidifier ledit raccordement pour que la membrane correspondante puisse supporter les contraintes induites et ne se retourne donc pas, lors d'une mise sous vide de la canalisation 8 ou d'une vidange rapide de l'installation protégée, cette vidange provoquant un effet de siphonnage.

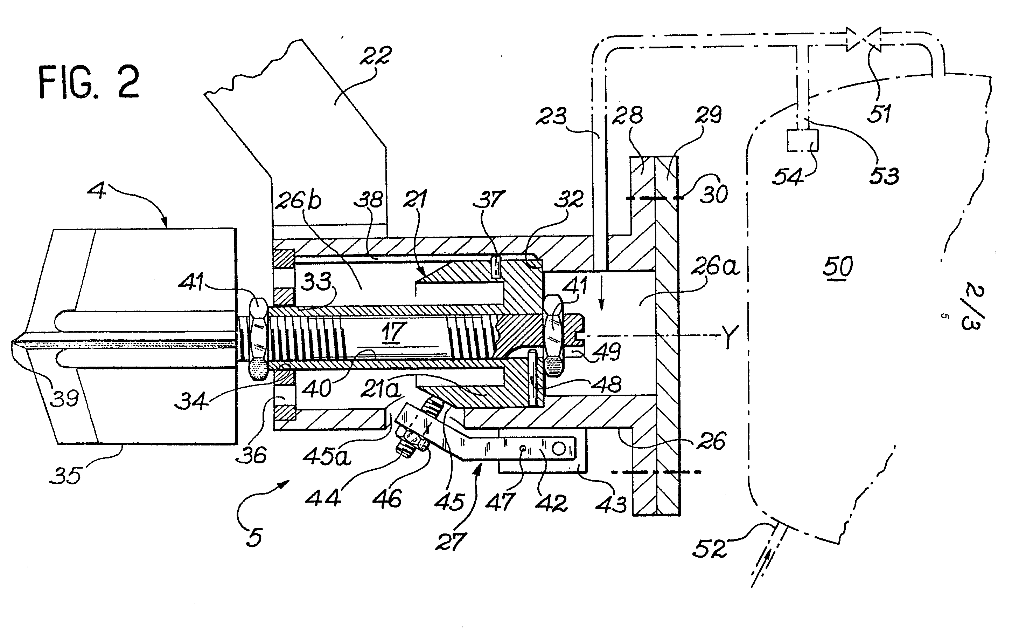

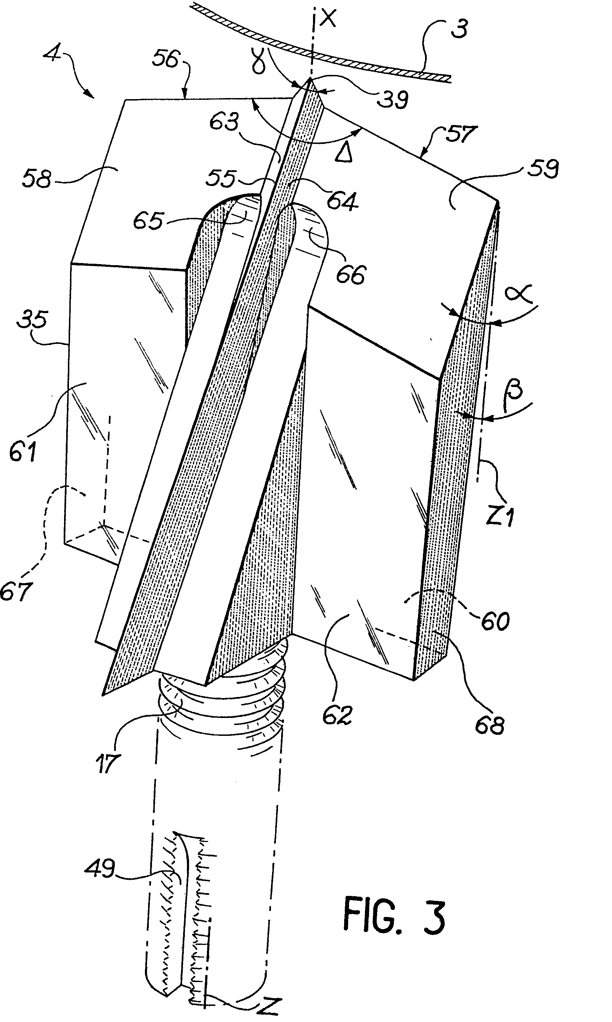

Les moyens 5 pour faire percuter la membrane 3 par le couteau 4 sont des moyens pneumatiques comportant une pièce creuse cylindrique 26 d'axe Y (figure 2) dans laquelle un piston 21 est susceptible de coulisser suivant l'axe Y. Le couteau 4 comporte une tige filetée 17 prolongée par une partie coupante 35 terminée par une pointe 39 (figures 2 et 3), la tige filetée 39 étant fixée au piston 21 de façon que l'axe Z de la tige coïncide avec l'axe Y de la pièce creuse 26. Les moyens pneumatiques 5 sont montés à l'intérieur de l'élément modulaire 2 correspondant, en regard de la face convexe de la membrane, sur des supports 22 fixés à la paroi interne de l'élément modulaire, et de façon que la direction de déplacement du piston 21 soit parallèle à l'axe de symétrie X de la calotte sphérique constituant la membrane 3 (les axes X et Y étant ainsi parallèles) et que la pointe 39 du couteau 4 se déplace le long dudit axe de symétrie X (et en direction de la membrane) lorsque l'on fait fonctionner les moyens pneumatiques 5, ce qui permet à la pointe 39 de venir percuter la membrane 3 en le sommet de celle-ci, c'est-à-dire en l'intersection de la membrane et de son axe de symétrie. (Il est à noter que les éléments modulaires cylindriques 2, qui sont identiques et montés en série, ont un même axe de symétrie qui est confondu avec l'axe de symétrie X des membranes).

Les moyens pneumatiques 5 sont alimentés en un gaz sous pression par un conduit 23 qui pénètre dans l'élément modulaire correspondant par un passage étanche non représenté. Ledit élément modulaire est également pourvu d'un perçage 24 par lequel on peut injecter un gaz chimiquement inerte tel que l'argon ou l'azote dans l'espace où se trouve le couteau 4 (ledit gaz étant bien entendu à une pression très inférieure à celle qui s'exerce sur la face concave de la membrane). Enfin, une électrode 25 schématiquement représentée par un trait mixte et prévue pour détecter la présence du fluide tel que le sodium liquide, en aval de la membrane 3, c'est-à-dire dans l'espace où se trouve le couteau 4, traverse l'élément modulaire 3 par un passage étanche et électriquement isolant, non représenté.

Sur la figure 2, on a représenté schématiquement un mode de réalisation particulier des moyens pneumatiques 5 permettant de faire percuter la membrane par le couteau 4. Ces moyens pneumatiques 5 comprennent essentiellement: la pièce creuse cylindrique 26 d'axe Y, formant une chambre de compression; des moyens d'alimentation en gaz de cette chambre, constitués par le conduit 23; le piston 21 prévu pour coulisser dans la chambre de compression suivant l'axe Y; et des moyens mécaniques 27 prévus pour immobiliser le piston dans la chambre et pour s'effacer sous l'effet d'un déplacement dudit piston.

L'extrémité de la pièce creuse 26, la plus éloignée de la membrane, est ouverte et comporte une bride 28. Elle peut être obturée classiquement à l'aide d'une plaque 29 pourvue d'une bride que l'on peut assembler à la bride 28 à l'aide de boulons 30 schématiquement représentés par des traits mixtes. L'intérieur de la pièce creuse 26 comporte une première partie cylindrique 26a dans laquelle débouche le conduit 23 et une seconde partie cylindrique 26b de plus grand diamètre et de même axe Y que la première, plus proche que celle-ci de la membrane et dans laquelle le piston 21 est destiné à coulisser. Du fait de la différence des diamètres, les deux parties sont délimitées par un épaulement circulaire 32 contre lequel le piston 21 peut venir en butée. Ce piston 21 comporte un corps principal 21a prolongé par une tige 33 également d'axe Y, prévue pour coulisser dans un perçage calibré 34 pratiqué dans l'extrémité de la pièce creuse 26 la plus proche de la membrane, extrémité qui est une pièce rapportée (pour la mise en place du piston) et qui est en outre percée de trous 36 prévus pour que le déplacement du piston ne soit pas gêné par le gaz susceptible de se trouver dans ladite seconde partie 26b. En outre, toute rotation du piston 21 par rapport à la pièce creuse 26 est empêchée grâce à une clavette 37 fixée à la périphérie du corps principal 21a du piston 21 et prise dans une rainure 38 pratiquée parallèlement à l'axe Y, sur la paroi interne qui délimite la seconde partie 26b de l'intérieur de la pièce creuse 26.

La tige filetée 17 du couteau 4 passe dans un trou calibré 40 d'axe Y, traversant le corps principal 21a et la tige 33 du piston 21 auquel elle est fixée grâce à deux écrous 41 vissés sur la tige filetée 17, de part et d'autre du piston 21 et contre celui-ci, ces deux écrous permettant en outre le réglage de la position du couteau 4 par rapport au piston 21 et donc pra rapport à la membrane 3.

Le corps principal 21a du piston 21 est maintenu contre l'épaulement 32, grâce auxdits moyens mécaniques 27 comportant un levier 42 dont une extrémité est articulée en rotation d'axe perpendiculaire à l'axe Y, sur un support 43 fixé sur la pièce creuse 26, à l'extérieur de celle-ci, ladite rotation étant empêchée par une goupille 47 traversant le levier 42 et s'engageant dans le support 43, et dont l'autre extrémité comporte un trou taraudé traversé par une vis 44 qui d'un côté appuie sur une facette inclinée 45 du corps principal 21a du piston 21 en passant par un trou 45a pratiqué dans ledit corps principal 21a, et de l'autre côté porte un écrou de blocage 46. (Le déplacement de la vis 44 par rapport au levier 42 permet d'ajuster la position du piston 21 dans la pièce creuse 26).

Toute rotation du couteau 4 par rapport au piston 21 est empêchée grâce à une autre clavette 48 fixée à ce dernier et prise dans une autre rainure 49 pratiquée à la périphérie de la tige filetée 17 du couteau 4, parallèlement à l'axe Y.

Le conduit 23 relie la première partie 26a de l'intérieur de la pièce creuse 26 à un réservoir 50 contenant un gaz chimiquement inerte, tel que l'argon ou l'azote sous pression. Ce gaz peut être envoyé dans ladite première partie 26a en ouvrant une électrovanne 51 montée sur le conduit 23.

Sur la figure 2, on voit également une canalisation 52 prévue pour remplir de gaz le réservoir 50, ainsi qu'un autre conduit 53 dont une extrémité débouche dans le conduit 23, entre l'électrovanne 51 et la pièce creuse 26, et dont l'autre extrémité débouche dans le réservoir 50. Cette autre extrémité est obturée par une capsule 54 qui peut être détruite par un dispositif pyrotechnique non représenté, afin d'envoyer le gaz dans ladite première partie 26a, au lieu d'utiliser pour ce faire l'électrovanne 51.

Sur la figure 3, on a représenté schématiquement un mode de réalisation préféré du couteau 4. Il comprend la partie coupante 35 rigidement liée à la tige filetée 17 d'axe Z, cet axe Z étant parallèle à l'axe de symétrie X de la membrane 3 et confondu avec l'axe Y de la pièce creuse 26 lorsque le couteau 4 est monté sur le piston 21 (figure 2). La partie coupante 35 (figure 3) comprend une lèvre coupante centrale 55 terminée en pointe (référence 39) et bordée par deux lèvres coupantes d'attaque 56 et 57 symétriques l'une de l'autre par rapport à la lèvre centrale 55. Les lèvres d'attaque 56 et 57 sont délimitées, d'un côté, respectivement par des faces planes de dégagement 58 et 59 parallèles à l'arête de la lèvre centrale 55 et faisant un angle aigu avec l'axe Z de la tige filetée 17, et de l'autre côté, par une même face plane 60 faisant avec l'axe Z de la tige filetée 17 un angle de dépouille très inférieur audit angle aigu. Les faces de dégagement 58 et 59 se prolongent en direction de la tige filetée respectivement par deux faces planes 61 et 62 parallèles à l'axe Z de la tige filetée 17. La lèvre centrale 55 est délimitée par deux facettes 63 et 64 planes, allongées, formant un angle aigu et dominant les faces planes de dégagement, tout en se prolongeant en direction de la tige filetée 17. De plus, les deux facettes 63 et 64 sont limitées, du côté des lèvres d'attaque, par le plan contenant ladite même face plane 60, de façon à former la pointe 39 qui termine la lèvre centrale 55.

A titre indicatif et non limitatif, ledit angle aigu $\alpha$ entre les faces de dégagement 58 et 59 (ou l'arête de la lèvre centrale 55) et l'axe Z de la tige filetée 17 est de l'ordre de 30°, l'angle de dépouille $\beta$ entre ladite même face plane 60 et l'axe Z est de l'ordre de 2°, l'angle $\gamma$ formé par les facettes 63 et 64 délimitant la lèvre centrale 55 est de l'ordre de 20° et les arêtes des lèvres d'attaque (consituées par les intersections desdites faces de dégagement 58 et 59 avec ladite même face plane 60) forment entre elles un angle $\triangle$ de l'ordre de 156°, ce qui implique bien entendu une légère inclinaison des faces de dégagement 58 et 59 l'une par rapport à l'autre. (Sur la figure 3, les angles $\alpha$ et $\beta$ sont repérés par

rapport à un axe Z1 parallèle à l'axe Z). Enfin, la partie coupante 35 est limitée parallèlement à l'axe Z par deux plans 67 et 68 parallèles.

Sur la figure 3, on voit également des domaines 65 et 66 qui sont des parties détalonnées correspondant aux dégagements d'un outil employé pour réaliser le couteau.

Le fonctionnement passif du dispositif objet de l'invention est le suivant (figure 2): la plaque 30 étant ôtée, la distance entre la membrane et le couteau est réglée grâce aux deux écrous 41. Pour ce faire, l'écrou le plus proche de la membrane est vissé et l'autre dévissé, ou réciproquement, selon que l'on cherche à rapprocher ou à éloigner le couteau de la membrane. Puis le piston 21 est maintenu en appui contre l'épaulement 32 grâce à la vis 44 qui appuie sur lui, la goupille 47 étant engagée, comme on l'a vu plus haut. Le réglage étant effectué, on remet en place la plaque 30 et l'on assemble sa bride à celle 28 de la pièce creuse 26. Bien entendu, ceci est réalisé pour chaque ensemble membrane-couteau du dispositif de l'invention et avant la mise en place de l'élément modulaire correspondant.

On précise que le couteau est positionné, à la température ambiante, par rapport à la membrane, à une distance déterminée grâce à une courbe de déformation établie à partir d'une autre membrane identique à la précédente et ce, à la température d'utilisation prévue pour la membrane. Les contraintes obtenues lors de la déformation de la membrane jusqu'à l'amorce de la fissuration de celle-ci sur le couteau (il s'agit bien entendu d'une membrane soumise à la pression du fluide) sont telles qu'elles engendrent la propagation de ladite déformation puis l'éclatement de la membrane (ceci ayant donc lieu pour une pression déterminée du fluide, fonction de la distance prérég lée membrane-couteau).

On a vu plus haut qu'il peut être intéressant d'anticiper l'éclatement de la membrane, Ceci correspond au fonctionnement actif du dispositif objet de l'invention, qui est le suivant: la distance couteau-membrane étant réglée comme on l'a indiqué précédemment, la chambre constituée par ladite première partie 26a (figure 2) de l'intérieur de la pièce creuse 26 est mise en pression, en ouvrant l'électrovanne 51 ou en détruisant la capsule 54. La force qui s'exerce alors sur le piston 21 est transmise par ce dernier au levier 42 et donc à la goupille 47 perpendiculairement à celle-ci. Lorsque la contrainte appliquée à cette goupille est suffisante, de l'ordre de 4 daN/mm² par exemple, la goupille est cisaillée, ce qui libère le piston porteur du couteau. Ce dernier percute la membrane et initie une entaille sur celle-ci, entaille qui est suffisante pour engendrer l'éclatement de la membrane.

Il est à noter que lors d'un tel fonctionnement actif du dispositif de sécurité objet de l'invention, l'entaille faite par le couteau peut être supérieure à celle qui est initiée lors d'un fonctionnement passif du dispositif, si la pression dans l'installation protégée, au moment du déclenchement du dispositif, est inférieure à ladite pression prédéterminée (correspondant à un éclatement «passif»).

Que le dispositif ait un fonctionnement actif ou passif, le fonctionnement du couteau est le suivant (figure 3): lorsque la pointe 39 du couteau a percé la membrane, le découpage obtenu pour celle-ci est analogue à celui que ferait une cisaille. Le mouvement d'avance est produit par la déformation de la membrane sous l'effet de la pression (fonctionnement passif) ou du déplacement du couteau lors de la percussion (fonctionnement actif). A chaque pas de déformation ou de déplacement, l'angle de coupe $\triangle$ initie une entaille plus grande en retenant et en écartant d'un côté la tôle de la membrane par la surface de dégagement constituée par les faces de dégagement 58 et 59, tout en laissant l'autre côté «glisser» le long de ladite même face plane 60.

Un même couteau peut être utilisé avec des membranes ayant des diamètres de base différents à condition que les lèvres d'attaque aient une largeur suffisante pour engendrer dans ces membranes la «boutonnière» qui provoque l'éclatement. En effet, compte tenu de la géométrie du couteau, une membrane peut éclater avec cette largeur d'entaille sans altérer la valeur de la pression d'éclatement, c'est-à-dire que la largeur du couteau peut être nettement supérieure à celle de l'entaille.

**Revendications**

1. Dispositif de sécurité destiné à limiter la pression d'un fluide à une valeur prédéterminée, ce dispositif comprenant au moins un élément modulaire (2) creux, ouvert à ses deux extrémités, et, pour chaque élément modulaire (2): des moyens d'étanchéité (14) montés sur lesdites extrémités, une membrane préformée (3) présentant une face convexe et une face concave, et montée comme obturateur étanche de l'une des extrémités, la face convexe de ladite membrane (3) étant orientée vers l'intérieur de l'élément modulaire (2), et un couteau (4) monté à l'intérieur de l'élément modulaire (2), en regard de la face convexe de la membrane (3) et à une distance réglable de cette face convexe de sorte qu'une pression prédéterminée exercée par le fluide sur la face concave de ladite membrane (3) amène cette membrane au contact du couteau (4) qui provoque alors son éclatement, dispositif caractérisé en ce qu'il comporte pour chaque élément modulaire (2), des moyens (5) pour faire percuter la membrane (3) par le couteau (4), afin de pouvoir provoquer l'éclatement de ladite membrane lorsque la face concave de celle-ci est soumise de la part du fluide à une pression inférieure à ladite pression prédéterminée.

2. Dispositif selon la revendication 1, caractérisé en ce que lesdits moyens (5) pour faire percuter la membrane (3) par le couteau (4) comportent une partie (21) susceptible de se déplacer et en ce que le couteau (4) est rendu solidaire de cette partie (21) et a une position réglable par rapport à celle-ci.

3. Dispositif selon la revendication 2, caractérisé en ce que lesdits moyens (5) pour faire percuter la membrane (3) par le couteau (4) comprennent une chambre (26a, 26b) montée à l'intérieur de l'élément modulaire (2) en regard de la face convexe de la membrane (3), des moyens (23) d'alimentation en gaz de la chambre pour la mise en pression de celle-ci, un piston (21) qui, d'une part porte le couteau (4), celui-ci ayant une position réglable par rapport au piston (21), et qui d'autre part, est prévu pour coulisser dans la chambre lors de la mise en pression de celle-ci, en direction de la face convexe de la membrane (3), et des moyens mécaniques (42, 44, 47) prévus pour immobiliser le piston (21) dans la chambre et pour s'effacer sous l'effet d'un déplacement du piston lors de la mise en pression de la chambre.

4. Dispositif selon la revendication 3, caractérisé en ce que le couteau (4) est bloqué en rotation par rapport au piston (21) et en ce que le piston (21) est bloqué en rotation par rapport à ladite chambre (26a, 26b).

5. Dispositif selon l'une quelconque des revendications 1 à 4, caractérisé en ce que le couteau (4) comprend une lèvre centrale (55) terminée en pointe (39) et bordée par deux lèvres d'attaque (56, 57) de façon à pouvoir d'abord percer la membrane (3) et ensuite cisailler celle-ci.

6. Dispositif selon la revendication 5, caractérisé en ce que, la pointe (39) du couteau (4) étant susceptibel de se déplacer selon une direction déterminée, sous l'effet desdits moyens (5) pour faire percuter la membrane (3) par le couteau (4), les lèvres d'attaque (56, 57) sont délimitées, d'un côté, respectivement par des faces planes de dégagement (58, 59) faisant un angle aigu ($\alpha$) supérieur à 5° avec ladite direction déterminée et, de l'autre côté, par une même face plane (60) faisant avec ladite direction déterminée un angle de dépouille ($\beta$) inférieur audit angle aigu ($\alpha$) et au plus égal à 5°.

7. Dispositif selon la revendication 6, caractérisé en ce que, la membrane (3) présentant la forme d'une calotte sphérique, les moyens (5) pour fair percuter la membrane (3) par le couteau (4) sont prévus pour que sous leur effet, la pointe (39) du couteau (4) se déplace le long de l'axe de symétrie (X) de ladite calotte sphérique de façon à percuter la membrane (3) en son sommet.

8. Dispositif selon l'une quelconque des revendications 1 à 7, caractérisé en ce que le couteau (4) est placé dans un milieu gazeux chimiquement inerte.

**Patentansprüche**

1. Sicherheitsvorrichtung zum Begrenzen des Drucks eines Fluids auf einen vorbestimmten Wert, mit wenigstens einem hohlen Modulelement (2), das an seinen zwei Enden offen ist, und wobei jedes Modulelement (2) umfasst: an den zwei Enden angebrachte Dichtungsmittel (14), eine vorgeformte Membrane (3), die eine konvexe und eine konkave Seite aufweist und als dichter Verschluss eines der Enden angebracht ist, wobei die konvexe Seite der Membrane (3) zum Inneren des Modulelements (2) hin ausgerichtet ist, und ein Messer (4), welches im Inneren des Modulelementes (2) der konvexen Seite der Membrane (3) gegenüberliegend und mit einem zu dieser konvexen Seite einstellbaren Abstand derart angebracht ist, dass ein von dem Fluid auf die konkave Seite der Membrane (3) ausgeübter, vorbestimmter Druck diese Membrane in Berührung mit dem Messer (4) bringt, welches dann deren Bersten hervorruft, dadurch gekennzeichnet, dass die Vorrichtung für jedes Modulelement (2) Mittel (5) zum Durchstossen der Membrane (3) mit dem Messer (4) aufweist, um das Bersten der Membrane hervorzurufen, wenn ihre konkave Seite durch das Fluid einem Druck ausgesetzt ist, der kleiner als der vorbestimmte Druck ist.

2. Vorrichtung nach Anspruch 1, dadurch gekennzeichnet, dass die Mittel (5) zum Durchstossen der Membrane (3) mit dem Messer (4) ein verschiebbares Teil (21) umfassen und dass das Messer (4) fest mit diesem Teil (21) und in einer in Bezug auf dieses einstellbaren Lage verbunden ist.

3. Vorrichtung nach Anspruch 2, dadurch gekennzeichnet, dass die Mittel (5) zum Durchstossen der Membrane (3) mit dem Messer (4) umfassen: eine im Inneren des Modulelements (2) der konvexen Seite der Membrane (3) gegenüberliegend angebrachte Kammer (26a, 26b), Gaszuführmittel (23) für die Kammer, um diese unter Druck zu setzen, einen Kolben (21), der einerseits das Messer (4) trägt, welches eine in Bezug auf den Kolben (21) einstellbare Lage aufweist, und andererseits vorgesehen ist, sich in der Kammer, wenn diese unter Druck gesetzt wird, in Richtung zu der konvexen Seite der Membrane (3) zu verschieben, und mechanische Mittel (42, 44, 47), die vorgesehen sind, um den Kolben (21) in der Kammer festzulegen und durch die Wirkung einer Verschiebung des Kolbens diesen freizugeben, wenn die Kammer unter Druck gesetzt wird.

4. Vorrichtung nach Anspruch 3, dadurch gekennzeichnet, dass das Messer (4) relativ zu dem Kolben (21) drehblockiert ist und dass der Kolben (21) relativ zu der Kammer (26a, 26b) drehblockiert ist.

5. Vorrichtung nach einem der Ansprüche 1 bis 4, dadurch gekennzeichnet, dass das Messer (4) eine Mittelschneide (55) aufweist, die in einer Spitze (39) endet und von zwei Angriffsschneiden (56, 57) derart eingefasst ist, dass zuerst die Membrane (3) durchstossen und dann zerschnitten werden kann.

6. Vorrichtung nach Anspruch 5, dadurch gekennzeichnet, dass sich die Spitze (39) des Messers (4) längs einer vorbestimmten Richtung unter der Wirkung der Mittel (5) zum Durchstossen der Membrane (3) mit dem Messer (4) verschieben kann, dass die Angriffsschneiden (56, 57) auf einer Seite jeweils durch eine ebene Ableitfläche (58, 59), die mit der vorbestimmten Richtung einen spitzen Winkel ($\alpha$) von mehr als 5° bildet, und auf der anderen Seite durch eine gleiche ebene Fläche (60) begrenzt sind, die mit der vorbestimmten Richtung einen Freiwinkel ($\beta$) aufweist, der kleiner als der spitze Winkel ($\alpha$) und höchstens gleich 5° ist.

7. Vorrichtung nach Anspruch 6, dadurch gekennzeichnet, dass die Membrane (3) die Form einer Kugelkalotte aufweist, dass die Mittel (5) zum Durchstossen der Membrane (3) mit dem Messer (4) vorgesehen sind, damit sich unter ihrer Wirkung die Spitze (39) des Messers (4) längs der Symmetrieachse (X) der Kugelkalotte derart verschiebt, dass die Membrane (3) auf ihrem höchsten Punkt durchstossen wird.

8. Vorrichtung nach einem der Ansprüche 1 bis 7, dadurch gekennzeichnet, dass das Messer (4) in einer chemisch inerten, gasförmigen Umgebung angeordnet ist.

**Claims**

1. Safety device designed to limit the pressure of a fluid to a predetermined value, this device comprising at least one hollow modular component (2) open at both ends and, for each modular component (2): sealing means (14) mounted on the said ends, a preformed membrane (3) possessing a convex face and a concave face and mounted as a leakproof seal of one of the ends, the convex face of the said membrane (3) being orientated towards the inside of the modular component (2), and a knife (4) mounted inside the modular component (2), opposite the convex face of the membrane (3) and at an adjustable distance from this convex face, so that a predetermined pressure exerted by the fluid on the concave face of the said membrane (3) brings this membrane into contact with the knife (4) which then causes it to burst, the device being characterized in that it contains, for each modular component (2), means (5) for causing the membrane (3) to be struck by the knife (4) so as to be able to cause the said membrane to burst when the concave face of the latter is subjected, through the action of the fluid, to a pressure less than the said predetermined pressure.

2. Device according to Claim 1, characterized in that the said means (5) for causing the membrane (3) to be struck by the knife (4) incorporate a part (21) which is capable of moving and in that the knife (4) is made firmly united to this part 21) and has a position which is adjustable relative to the latter.

3. Device according to Claim 2, characterized in that the said means (5) for causing the membrane (3) to be struck by the knife (4) comprise a chamber (26a, 26b) mounted inside the modular component (2) opposite the convex face of the membrane (3), means (23) for feeding the chamber with gas in order to place the chamber under pressure, a plunger (21) which, on the one hand, carries the knife (4), the latter having a position which is adjustable relative to the plunger (21), and which plunger, on the other hand, is designed to slide in the chamber when the latter is placed under pressure, in the direction of the convex face of the membrane (3), and mechanical means (42, 44, 47) designed to immobilize the plunger (21) in the chamber and to be overriden under the effect of a movement of the plunger when the chamber is placed under pressure.

4. Device according to Claim 3, characterized in that the knife (4) is locked in rotation relative to the plunger (21) and in that the plunger (21) is locked in rotation relative to the said chamber (26a, 26b).

5. Device according to any one of Claims 1 to 4, characterized in that the knife (4) comprises a central lip (55) terminating in a point (39) and edged by two cutting lips (56, 57), so as to be able first to pierce the membrane (3) and then to shear the latter.

6. Device according to Claim 5, characterized in that, since the point (39) of the knife (4) is capable of moving according to a specified direction under the effect of the said means (5) for causing the membrane (3) to be struck by the knife (4), the cutting lips (56, 57) are delimited, on the one hand, respectively, by flat clearance faces (58, 59) forming an acute angle ($\alpha$) of greater than 5° with the said specified direction, and on the other hand, by a single flat face (60) forming with the said specified direction a relief angle ($\beta$), smaller than the said acute angle ($\alpha$) and at most equal to 5°.

7. Device according to Claim 6, characterized in that, since the membrane (3) is in the shape of a spherical cap, the means (5) for causing the membrane (3) to be struck by the knife (4) are designed so that, under their effect, the point (39) of the knife (4) moves along the axis of symmetry (X) of the said spherical cap so as to strike the membrane (3) at its crown.

8. Device according to any one of Claims 1 to 7, characterized in that the knife (4) is placed in a chemically inert gaseous medium.

FIG. 1

FIG. 2

0 122 851

0 122 851    3/3

FIG. 3